# EUROPEAN PATENT APPLICATION

(11) **EP 4 357 320 A1**
(43) Date of publication of application: **24.04.2024**
(21) Application number: 21946185.2
(22) Date of filing: 21.12.2021
(51) Int. Cl.: C05F 11/08, C05F 5/00, C05G 5/20

(54) **LIQUID FERTILIZER COMPOSITION FOR BROCCOLI CULTIVATION AND USE THEREOF**

(30) Priority: 18.06.2021 KR 20210079291
(71) Applicant: Nam, Chun Woo, Suwon-si, Gyeonggi-do 16205 (KR); Moon, Hee Ja, Suwon-si, Gyeonggi-do 16604 (KR)
(72) Inventor: YANG, Eun Young, Wanju-gun Jeollabuk-do 55365 (KR); JEONG, Hyo Bong, Wanju-gun Jeollabuk-do 55365 (KR); CHO, Myeong Cheoul, Wanju-gun Jeollabuk-do 55365 (KR); NAM, Chun Woo, Suwon-si, Gyeonggi-do 16205 (KR); MOON, Hee Ja, Suwon-si Gyeonggi-do 16604 (KR)
(74) Representative: dompatent von Kreisler Selting Werner - Partnerschaft von Patent- und Rechtsanwälten mbB
(86) International application number: PCT/KR2021/019463
(87) International publication number: WO 2022/265174

(57) **Abstract**

The present invention relates to a liquid fertilizer composition for broccoli cultivation and the use thereof. The liquid fertilizer composition for broccoli cultivation according to the present invention may be applied during broccoli cultivation, thereby producing broccoli with an increased content of any one of functional components, including beta-carotene, vitamin C, and polyphenol.

## Description

### Technical Field

The present invention relates to a liquid fertilizer composition for broccoli cultivation and the use thereof.

### Background Art

Liquid fertilizer is a liquid fertilizer in which nutrients needed by plants are dissolved in water or other solvents, or fine particles such as nutrients or microorganisms are dispersed in a solvent. Recently, with the scaling-up, institutionalization, mechanization and automation of crop cultivation, applying nutrients, required by crops, to crops in the form of liquid fertilizer in the cultivation of many crops, including fruit trees, has increased significantly.

Meanwhile, broccoli is one of the top 10 super foods selected by Time magazine in the U.S. It has a taste similar to cabbage but is slightly milder in taste, and generally contains, per 100 g, 114 mg of vitamin C, 1.9 mg of carotene, and 164 mg of potassium, and 150 mg of calcium. It also contains twice as much iron as other vegetables. It contains twice the amount of vitamin C than lemon, contains components such as beta-carotene and selenium, which have anti-cancer effects, and is 10 times richer in sulforaphane, an antioxidant, than other vegetables. It is also characterized by being low in calories while being rich in various components such as calcium, lutein, and vitamin A.

Various methods are used in the cultivation of broccoli, but various studies have been conducted to increase the contents of functional components (such as beta-carotene or polyphenol) in broccoli. The present inventors have conducted extensive studies, and as a result, have invented a liquid fertilizer that can increase the contents of functional components in broccoli.

### DISCLOSURE

### Technical Problem

An object of one aspect of the present invention is to provide a liquid fertilizer composition for broccoli cultivation containing broccoli liquid fertilizer, herbs, purslane, *Ecklonia cava,* and *Hizikia fusiforme.*

An object of another aspect of the present invention is to provide a method for preparing a liquid fertilizer composition for broccoli cultivation including steps of: (a) mixing broccoli by-products, including broccoli fruits and non-lignified stems, and based on 100 parts by weight of the broccoli by-products, 0.2 parts by weight of sea salt and 0.2 parts by weight of humus; (b) aging the mixture of step (a) at room temperature; (c) mixing herbs, purslane, *Ecklonia cava,* and *Hizikia fusiforme* at a weight ratio of 1:1:1:1; (d) mixing the mixture of step (c) and, based on 100 parts by weight of the mixture of step (c), 0.2 parts by weight of sea salt and 0.2 parts by weight of humus; (e) aging the mixture of step (d) at room temperature; and (f) mixing the aged product of step (b) and the aged product of step (e) at a ratio of 1:1.

An object of still another aspect of the present invention is to provide the use of broccoli liquid fertilizer, herbs, purslane, *Ecklonia cava,* and *Hizikia fusiforme* for preparing a liquid fertilizer composition for broccoli cultivation.

An object of yet another aspect of the present invention is to provide a broccoli cultivation method including a step of treating broccoli with the composition.

An object of still yet another aspect of the present invention is to provide the use of the composition for broccoli cultivation.

### Technical Solution

One aspect of the present invention provides a liquid fertilizer composition for broccoli cultivation containing broccoli liquid fertilizer, herbs, purslane, *Ecklonia cava,* and *Hizikia fusiforme.*

In one embodiment of the present invention, the broccoli liquid fertilizer may be prepared by mixing and fermenting broccoli fruits, non-lignified broccoli stems, sea salt, and humus.

In one embodiment of the present invention, the herbs may be any one or more selected from among *Agastache rugosa,* Panax ginseng, and *Atractylodes japonica.*

In one embodiment of the present invention, the composition may increase the content of any one of beta-carotene, vitamin C, and polyphenol.

Another aspect of the present invention provides a method for preparing a liquid fertilizer composition for broccoli cultivation including steps of: (a) mixing broccoli by-products, including broccoli fruits and non-lignified stems, and based on 100 parts by weight of the broccoli by-products, 0.2 parts by weight of sea salt and 0.2 parts by weight of humus; (b) aging the mixture of step (a) at room temperature; (c) mixing herbs, purslane, *Ecklonia cava,* and *Hizikia fusiforme* at a weight ratio of 1:1:1:1; (d) mixing the mixture of step (c) and, based on 100 parts by weight of the mixture of step (c), 0.2 parts by weight of sea salt and 0.2 parts by weight of humus; (e) aging the mixture of step (d) at room temperature; and (f) mixing the aged product of step (b) and the aged product of step (e) at a ratio of 1:1.

In one embodiment of the present invention, the herbs may be any one or more selected from among *Agastache rugosa,* Panax ginseng, and *Atractylodes japonica.*

In one embodiment of the present invention, the composition may increase the content of any one of beta-carotene, vitamin C, and polyphenol.

Still another aspect of the present invention provides the use of broccoli liquid fertilizer, herbs, purslane, *Ecklonia cava,* and *Hizikia fusiforme* for preparing a liquid fertilizer composition for broccoli cultivation.

Yet another aspect of the present invention provides a broccoli cultivation method including a step of treating broccoli with the composition.

Still yet another aspect of the present invention provides the use of the composition for broccoli cultivation.

### Advantageous Effects

The liquid fertilizer composition for broccoli cultivation according to the present invention may be applied during broccoli cultivation, thereby producing broccoli with an increased content of any one of functional components, including beta-carotene, vitamin C, and polyphenol.

### Best Mode

One aspect of the present invention provides a liquid fertilizer composition for broccoli cultivation containing broccoli liquid fertilizer, herbs, purslane, *Ecklonia cava,* and *Hizikia fusiforme.*

The composition is characterized by increasing the content of any one of beta-carotene, vitamin C, and polyphenol. Specifically, the composition may be applied during broccoli cultivation, thereby increasing the content of any one of beta-carotene, vitamin C, and polyphenol, which are functional components in cultivated broccoli.

Another aspect of the present invention provides a method for preparing a liquid fertilizer composition for broccoli cultivation including steps of: (a) mixing broccoli by-products, including broccoli fruits and non-lignified stems, and based on 100 parts by weight of the broccoli by-products, 0.2 parts by weight of sea salt and 0.2 parts by weight of humus; (b) aging the mixture of step (a) at room temperature; (c) mixing herbs, purslane, *Ecklonia cava,* and *Hizikia fusiforme* at a weight ratio of 1:1:1:1; (d) mixing the mixture of step (c) and, based on 100 parts by weight of the mixture of step (c), 0.2 parts by weight of sea salt and 0.2 parts by weight of humus; (e) aging the mixture of step (d) at room temperature; and (f) mixing the aged product of step (b) and the aged product of step (e) at a ratio of 1:1.

In one embodiment of the present invention, the broccoli liquid fertilizer may be prepared by mixing and fermenting broccoli fruits, non-lignified broccoli stems, sea salt, and humus.

In one embodiment of the present invention, the herbs may be any one or more selected from among *Agastache rugosa,* Panax ginseng, and *Atractylodes japonica.* Specifically, the herbs may be *Agastache rugosa,* Panax ginseng, and *Atractylodes japonica.*

The *Agastache rugosa,* Panax ginseng, *Atractylodes japonica,* purslane, *Ecklonia cava,* and *Hizikia fusiforme* that are used in the present invention may be available through known routes, and may also be collected directly in nature, cultivated, farmed, or purchased from known sources.

The composition prepared by the above preparation method is characterized by increasing the content of any one of beta-carotene, vitamin C, and polyphenol. Specifically, the composition may be applied during broccoli cultivation, thereby increasing the content of any one of beta-carotene, vitamin C, and polyphenol, which are functional components in cultivated broccoli.

Still another aspect of the present invention provides the use of broccoli liquid fertilizer, herbs, purslane, *Ecklonia cava,* and *Hizikia fusiforme* for preparing a liquid fertilizer composition for broccoli cultivation.

As described above, the broccoli liquid fertilizer may be prepared by mixing broccoli by-products, including broccoli fruits and non-lignified stems, and based on 100 parts by weight of the broccoli by-products, 0.2 parts by weight of sea salt and 0.2 parts by weight of humus, and aging the mixture at room temperature.

The herbs may be any one or more selected from among *Agastache rugosa,* Panax ginseng, and *Atractylodes japonica.* Specifically, the herbs may be *Agastache rugosa,* Panax ginseng, and *Atractylodes japonica.*

The herbs, purslane, *Ecklonia cava,* and *Hizikia fusiforme* may be mixed together at a weight ratio of 1:1:1:1, and based on 100 parts by weight of the mixture, 0.2 parts by weight of sea salt and 0.2 parts by weight of humus may be mixed with the mixture, followed by aging at room temperature. The broccoli liquid fertilizer and the herbs, purslane, *Ecklonia cava,* and *Hizikia fusiforme,* specifically the aged product of the herbs, purslane, *Ecklonia cava,* and *Hizikia fusiforme,* may be mixed together at a ratio of 1:1.

The broccoli liquid fertilizer, herbs, purslane, *Ecklonia cava,* and *Hizikia fusiforme* that are used to prepare a liquid fertilizer composition for broccoli cultivation are characterized by increasing the content of any one of beta-carotene, vitamin C, and polyphenol. Specifically, the broccoli liquid fertilizer, herbs, purslane, *Ecklonia cava,* and *Hizikia fusiforme* may be prepared into a liquid fertilizer composition for broccoli cultivation that may be applied during broccoli cultivation, thereby increasing the content of any one of beta-carotene, vitamin C, and polyphenol, which are functional components in cultivated broccoli.

Yet another aspect of the present invention provides a broccoli cultivation method including a step of treating broccoli with the composition.

Details of the composition are as described above.

The step of treating broccoli with the composition may be performed by a known method. Specifically, this step may be performed by treating the soil where broccoli is growing with the composition, or treating broccoli roots with the composition, or treating broccoli seeds with the composition, or spraying the composition onto the plant, or a combination thereof.

Still yet another aspect of the present invention provides the use of the composition for broccoli cultivation.

As described above, the broccoli liquid fertilizer, herbs, purslane, *Ecklonia cava,* and *Hizikia fusiforme* in the composition of the present invention can increase the content of any one of beta-carotene, vitamin C, and polyphenol, and thus the composition may be applied during broccoli cultivation, thereby increasing the content of any one of beta-carotene, vitamin C, and polyphenol, which are functional components in cultivated broccoli.

### Mode for Invention

Hereinafter, the present invention will be described in more detail by way of one or more specific examples. However, these examples are intended to illustrate one or more embodiments and the scope of the present invention is not limited to these examples.

### Example 1: Preparation of Liquid Fertilizer Composition for Broccoli Cultivation

### Example 1-1. Preparation of Broccoli Liquid Fertilizer

Broccoli liquid fertilizer was prepared by filling 80% of a 110-L water tank with broccoli by-products, adding 200 g of sea salt + 200 g of humus thereto, filling the tank with water to reach 100 L, and closing the lid, followed by fermentation for at least 1 year.

### Example 1-2. Preparation of Liquid Fertilizer Composition for Broccoli Cultivation

Herbs (*Agastache rugosa,* Panax ginseng, and *Atractylodes japonica*), purslane, *Ecklonia cava,* and *Hizikia fusiforme* were mixed together at a weight ratio of 1:1:1:1, and based on 100 parts by weight of the mixture, 0.2 parts by weight of sea salt and 0.2 parts by weight of humus were mixed with the mixture, followed by aging at room temperature.

A liquid fertilizer composition for broccoli cultivation was prepared by mixing the aged product and the broccoli liquid fertilizer of Example 1-1 at a ratio of 1:1.

The prepared liquid fertilizer composition for broccoli cultivation was diluted 20-fold (5%) and irrigated on broccoli using a liquid fertilizer injector (applied 4 times).

The sources of raw materials used in the preparation of the liquid fertilizer composition for broccoli cultivation or in the following experiments are as follows.

**[Table 1]**

| Date | Plant name | Collection area | Remarks |
|---|---|---|---|
| 3.15 and 6.20 | Lettuce | Rural Development Administration, breeding | Organic |
| 5.24 | Seaweed (3 types) | Wando | Dongori Beach |
| 5.25 | Seaweed (*Hizikia fusiforme, Sargassum thunbergii*) | Wando Cheongsando | Coast |
| 6.5 | Wild grass (*Rumex crispus*), mugword | Gimje | Byeokgolje embankment |
| 6.1 | Herb (purslane) | Hwabuk-myeon, Sangju | Organic farmer (Lim Seong-Jun) |
| 6.28 | Stevia | Rural Development Administration, breeding | Organic |
| 9.4 | Wild grass (Digitaria sanguinalis) | Rural Development Administration, wild | |
| 9.17-19 | Seaweed (*Ecklonia cava*) | Jocheon-eup, Jeju | Typhoon, for medicine and feed |
| Date | Plant name | Collection area | Remarks |
| 9.24 | Tomato | Rural Development Administration, packaging | Organic |
| 10.4 | Wild grass (Solidago altissima) | Gimje | Around Dongjin River |
| 10.28 | Pepper | Rural Development Administration, packaging | Organic |
| 10.31 | Wild grass (reed) | Gimje | Around Dongjin River |
| 11.5 | Herb (*Agastache rugosa*) | Rural Development Administration, breeding | Organic |
| 11.8 | Herb (Panax ginseng) | Jangsu | Jangsu Agricultural Technology |
| 11.11 | Seaweed (Salicornia herbacea) | Jido-eup, Shinan | Around Areumdawoon church |
| 11.28 | Herb (*Atractylodes japonica*) | Eumseong | Ginseng Special Operations Department of Rural Development Administration |
| 12.10 | Broccoli | Rural Development Administration, packaging | Organic |

### Experimental Example 1: Examination of Growth Characteristics of Broccoli Treated with Liquid Fertilizer Composition for Broccoli Cultivation

The growth characteristics of broccoli treated with the liquid fertilizer composition for broccoli cultivation prepared in Example 1 were examined. Specifically, broccoli which was being cultivated was treated with each of conventional fertilizer application method (B1), the composition of Example 1 (broccoli liquid fertilizer + herbs (3 types) + purslane + *Ecklonia cava* + *Hizikia fusiforme,* B2), broccoli liquid fertilizer (B3), broccoli + Panax ginseng + *Ecklonia cava* (B4), and broccoli + stevia (B5) during broccoli cultivation, and the growth characteristics of broccoli at the latter stage were examined.

As a result, as shown in Table 2 below, it was found that there were no differences in growth characteristics such as plant height, leaf length, leaf width, number of leaves, head height, and head width between the treated groups, indicating that the difference in fertilizer components between the liquid fertilizers was not significant. Also, it was confirmed that there was no difference in quantity because there was no loss such as damages by blight and harmful insects.

**[Table 2]**

| Treatment | Plant length | Leaf length | Leaf width | Number of leaves^{y} | Head weight | Head height | Head width | Quality |
|---|---|---|---|---|---|---|---|---|
| | (cm) | (cm) | (cm) | (number/s tern) | (g/head) | (cm) | (cm) | (number/10 a) |
| B1^{z} (control) | 57.0 | 54.7 | 18.8 | 17.7 | 371.2 | 18.7 | 13.6 | 2,000 |
| B2^{z} | 59.7 | 55.0 | 19.0 | 18.0 | 541.7 | 19.3 | 15.4 | 2,000 |
| B3^{y} | 65.0 | 55.7 | 20.0 | 18.0 | 405.1 | 18.4 | 13.2 | 2,000 |
| B4^{x} | 58.0 | 50.3 | 20.2 | 17.3 | 325.2 | 18.1 | 12.9 | 2,000 |
| B5^{w} | | - | - | - | - | - | - | 2,000 |
| DMRT 0.05 | ns | ns | ns | ns | * | ns | ns | ns |

### Experimental Example 2: Component Analysis of Broccoli Treated with Each Liquid Fertilizer

Changes in components (especially, functional components) of broccoli by treatment with the liquid fertilizer composition for broccoli cultivation prepared in Example 1 were checked. Specifically, the components of the broccoli plants cultivated in Experimental Example 2 above were analyzed.

As a result, as shown in Table 3 below, it was confirmed that, regarding the nutritional components of broccoli flower bunds obtained by treatment with each liquid fertilizer, the group treated with the liquid fertilizer composition of the present invention showed a 267% increase in beta-carotene 267%, a 153% increase in vitamin C, and a 130% increase in polyphenol, compared to the control group (conventional fertilizer application, B1). This suggests that the liquid fertilizer composition of the present invention increased the content of functional components in broccoli.

**[Table 3]**

| Treatment | Beta carotene | Vitamin C | Flavonoids | Polyphenol |
|---|---|---|---|---|
| | (µg/100g) | (mg/100g) | (mg/100g) | (mg/100g) |
| B1^{z} (control) | 1,016.93 | 437.70 | 252.31 | 540.77 |
| B2^{z} (invention) | 2,720.05 | 671.86 | 238.17 | 703.52 |
| B3^{y} | 2,209.28 | 673.74 | 253.71 | 716.17 |
| B4^{x} | 2,152.59 | 626.65 | 261.10 | 664.04 |
| B5^{w} | 1,260.78 | 590.73 | 265.54 | 634.95 |
| DMRT 0.05 | * | * | ns | * |
| B2/B1×100 (%) | 267.5% | 153.5 | 94.4 | 130.1 |

So far, the present invention has been described with reference to the embodiments. Those of ordinary skill in the art to which the present invention pertains will appreciate that the present invention may be embodied in modified forms without departing from the essential characteristics of the present disclosure. Therefore, the disclosed embodiments should be considered from an illustrative point of view, not from a restrictive point of view. The scope of the present invention is defined by the claims rather than the foregoing description, and all differences within the scope equivalent thereto should be construed as being included in the present invention.

## Claims

1. A liquid fertilizer composition for broccoli cultivation, comprising broccoli liquid fertilizer, herbs, purslane, *Ecklonia cava,* and *Hizikia fusiforme.*

2. The liquid fertilizer composition of claim 1, wherein the broccoli liquid fertilizer is prepared by mixing and fermenting broccoli fruits, non-lignified broccoli stems, sea salt, and humus.

3. The liquid fertilizer composition of claim 1, wherein the herbs are any one or more selected from among *Agastache rugosa,* Panax ginseng, and *Atractylodes japonica.*

4. The liquid fertilizer composition of claim 1, wherein the composition increases a content of any one of beta-carotene, vitamin C, and polyphenol.

5. A method for preparing a liquid fertilizer composition for broccoli cultivation, comprising steps of:
(a) mixing broccoli by-products, including broccoli fruits and non-lignified stems, and based on 100 parts by weight of the broccoli by-products, 0.2 parts by weight of sea salt and 0.2 parts by weight of humus;
(b) aging the mixture of step (a) at room temperature;
(c) mixing herbs, purslane, *Ecklonia cava,* and Hizikia fusiforme at a weight ratio of 1:1:1:1;
(d) mixing the mixture of step (c) and, based on 100 parts by weight of the mixture of step (c), 0.2 parts by weight of sea salt and 0.2 parts by weight of humus;
(e) aging the mixture of step (d) at room temperature; and
(f) mixing the aged product of step (b) and the aged product of step (e) at a ratio of 1:1.

6. The method of claim 4, wherein the herbs are any one or more selected from among *Agastache rugosa,* Panax ginseng, and *Atractylodes japonica.*

7. The method of claim 4, wherein the composition increases a content of any one of beta-carotene, vitamin C, and polyphenol.

8. Use of broccoli liquid fertilizer, herbs, purslane, *Ecklonia cava,* and *Hizikia fusiforme* for preparing a liquid fertilizer composition for broccoli cultivation.

9. A broccoli cultivation method comprising a step of treating broccoli with the composition of claim 1.

10. Use of the composition of claim 1 for broccoli cultivation.
